# EUROPEAN PATENT SPECIFICATION

(11) **EP 1 712 202 B1**
(45) Date of publication and mention of the grant of the patent: **09.12.2009**
(21) Application number: 06425254.7
(22) Date of filing: 10.04.2006
(51) Int. Cl.: A61C 5/02

(54) **Root canal reamers for completing apical preparation of root canal**
Zahnwurzelkanal-Aufbereitungsinstrument zur apicalen Vorbereitung von Wurzelkanälen
Alésoir pour canal radiculaire pour la préparation de la partie apicale du canal radiculaire

(30) Priority: 15.04.2005 IT PD20050108
(43) Date of publication of application: 18.10.2006
(73) Proprietor: Sweden & Martina S.p.a., 35020 Due Carrare (PD) (IT)
(72) Inventor: Malagnino, Vito Antonio, 35020 Due Carrare (PD) (IT)
(74) Representative: Vinci, Marcello

(56) References cited:
- EP-A- 1 405 609
- US-A- 4 457 710
- US-A- 5 219 284
- US-A- 5 628 674

## Description

The present patent concerns the sector of instruments for dentistry and in particular relates to root canal reamers.

The root canal reamers existing today have substantially:
- one, two or three cutting blades (cutting edges);
- a radial plane, which reduces the tendency of the tip to self-screwing in the material, but with the disadvantage of creating greater resistance to torsion;
- low cutting angles (helix), to reduce self-screwing of the instrument and limit jamming.

The cutting edges of the root canal reamers have the same configuration throughout the length of the working part. i.e.:
- they have the same section throughout the length of the working part, increasing as the diameter of the working part increases;
- they develop in a helix around the working part of the tip towards the connection;
- the helix development of the cutting edges is slanting to a greater or lesser degree with respect to the axis of the root canal reamer, i.e. the pitch of the cutting edges can be greater or lesser according to the model and use of the individual root canal reamer.

Root canal reamers for handpieces, having a shaft with two or three flutes, each developing in a helix around the whole shaft, are known.

EP 1 405 609 discloses a root canal reamer where said flutes have a limited number of turns (2 to 7) and the angle of the spiral remains substantially constant or varies by more than 25%.

US 5628674 relates to an endodontic instrument with cutting edges) helicoidally disposed along the whole working portion.

From this it follows that the tip part of each root canal reamer is aggressive to the extent that the remainder of the root canal reamer is aggressive.

In the preparation of root canals the above-mentioned instruments are used to remove the diseased part and permit subsequent filling.

The known root canal reamers, as described above, have a reduced taper so that they are flexible enough to follow the root canal.

It follows that the apical portion of the canal obtained with said instruments has a limited taper and reduced diameters.

To prepare the root canal for the subsequent filling, it may be necessary to further widen the apical portion of the root canal.

Widening of the apical portion of the root canal is currently performed with several manual root canal reamers with standard taper, in the order of 2%, and with increasing tip diameter.

This, in addition to being a complex exploratory operation, can also modify the configuration of the root canal.

On the other hand it is not possible, or it is in any case very complex, to produce root canal reamers having at the tip a very high taper and helical cutting edges. Said instruments, furthermore, break easily with consequent difficulty in extracting the broken stump of the root canal.

Furthermore, root canal reamers for handpieces, having a shaft with two or three flutes, each developing in a helix around the shaft with the exception of the tip, which is without cutting lips, are known.

US 5219284 relates to a set of endodontic instruments, each instruments comprising a conical steam provided with helicoidal cutting lips in the anterior portion, whereas the end portion of said steamn have a conical point without cutting lips.

US 4457710 relates to a dental instrument comprising a tapered working portion with flute means and a tapered end with a cylindrical, smooth and blunt tip, which have no surface capable of abrading.

The aim of the present invention is a new root canal reamer, with two cutting edges, particularly flexible, and configuration of the apical portion in which the cutting edges are linear and not helical, are symmetrical with respect to the axis of the instrument, and are arranged converging towards the tip with high angle greater than the taper of the rest of the working part.

Substantially the apical part of the instrument has a milling-type configuration, with the cutting edges slanting and such as to obtain, in rotation of the instrument, a high taper, greater than the rest of the working part of the instrument and greater than the current root canal reamers.

Said root canal reamer, in which the working part can be of any suitable length, has the apical section strongly tapered, while the remaining working part has a modest taper to guarantee flexibility of the instrument.

The advantages obtained are considerable, since the root canal reamer can be inserted in root canals already prepared with other root canal reamers, it does not modify the arrangement and aspect of the root canal already prepared apart from its apical portion, it allows for preparation or widening of only the apical portion of the root canal, and it allows for performance of the apical preparation operation in a uniform, quick and simple manner.

The new root canal reamer with milling bur for completing apical preparation can be produced in different sizes with different tapers from 10% to 25% for the tip portion and tip diameter from 015 to 040. The following ratios are preferable:
- Root canal reamer with tip diameter 020, tip taper of 0.15 (or 15%) and taper of the remaining working part 0.02 (or 2%).
- Root canal reamer with tip diameter 025, tip taper 0.15 (or 15%) and taper of the remaining working part 0.02 (or 2%).
- Root canal reamer with tip diameter 025, tip taper 0.20 (or 20%) and taper of the remaining working part 0.02 (or 2%).

The attached drawing illustrates a non-limiting example of a new tapered root canal reamer with two cutting edges with milling bur.

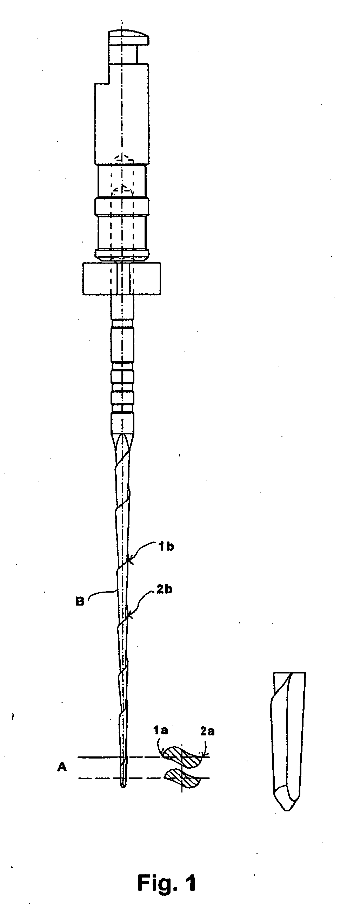

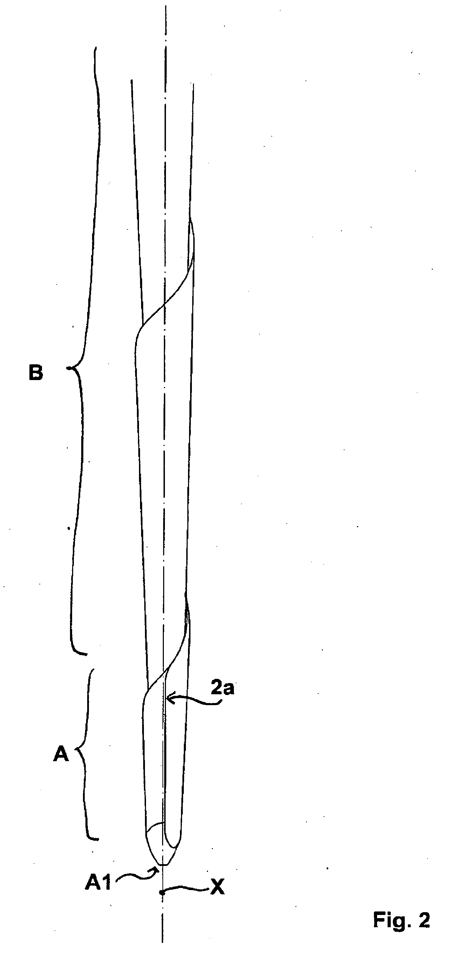

*Figure 1* *illustrates a side view of the root canal member.* *Figure 2* *illustrates in particular the tip portion (A) of the root canal member.*

The tip portion (A) of the root canal reamer, in the first few millimetres, is configured so as to present:
- the cutting edges (1a, 2a) linear and not helical;
- the cutting edges (1a, 2a) symmetrical with respect to the axis (X) of the instrument;
- the cutting edges (1a, 2a) lying on the same plane together with the axis (X) of the instrument;
- the cutting edges (1a, 2a) slanting with vertex facing towards the tip (A1) of the instrument;
- high angle between the two cutting edges (1a, 2a).

The remaining portion (B) of the working part of the root canal reamer has the same two cutting edges (1b, 2b) arranged helically, with increasing pitch and increasing clearing flute.

In the tip portion (A) said two cutting edges (1a, 2a) form an angle such as to obtain, during rotation of the instrument, a taper roughly ranging from 10% to 25%.

The remaining portion (B) of the working part of the instrument, with helical cutting edges (2a, 2b), has a modest taper, preferably 2%.

The diameter of the tip of the new instrument is between 015 and 040, preferably between 020 and 025.

The new root canal reamer thus constituted has, in the apical portion, the two cutting edges in a so-called tapered milling configuration.

The use of the new root canal reamer is simple, rapid and effective.

After preparing the required root canal, the walls of the apical area are worked with the new root canal reamer with suitable tip diameter, obtaining widening of the apical part of the root canal without interfering with the remaining part of the canal.

The new root canal reamer constituted as above has considerable advantages.

The new root canal reamer permits preparation of the apical portion of the root canal by simply inserting the instrument in the hole already shaped.

The new root canal reamer permits preparation of the apical portion of the root canal without affecting or modifying the remaining part of the root canal.

The particular shape of the cutting edges (1a, 1b) in the tip part (A) permits widening of the apical area of the root canal without affecting any other part of the canal.

The particular shape of the cutting edges (1a, 1b) in the tip part (A), i.e. linear and lying on a plane containing the axis of the instrument, prevents the instrument self-screwing in the hole.

The forward movement of the instrument in the hole is determined by the thrust given directly to the instrument.

The high taper of the cutting edges (1a, 1b) in the tip part (A) of the instrument permits widening of only the apical part of the root canal.

The remaining portion (B) of the new instrument, with helical cutting edges (2a, 2b) and low taper, extracts and removes the shavings detached from the tip part (A) and gives the new instrument flexibility and resistance.

Therefore with reference to the preceding description and the attached drawing the following claims are made.

## Claims

1. Root canal reamer, with two cutting edges (1, 2), **characterised in that** said cutting edges (1b, 2b) of the distal portion (B) are arranged in a helix whereas said cutting edges (1a, 2a) in the tip portion (A) are linear, converging towards the tip (A1) with high angle greater than the taper of the rest of the working part (B), lying on the same plane as the axis (X) of the root canal reamer and symmetrical with respect to the axis (X) of the root canal reamer.

2. Root canal reamer, according to claim 1, **characterised in that** the tip portion (A) with two linear cutting edges (1a, 2a) extends for less than 4 millimetres.

3. Root canal reamer, according to claims 1, 2, **characterised in that** the cutting edges (1b, 2b) of the distal portion (B) are arranged in a helix with pitch progressively increasing from the tip portion (A) towards the crown.

4. Root canal reamer, according to claims 1, 2, 3, **characterised in that** it has a diameter in the tip portion (A) of 020, taper in the tip portion (A) of 0.15 (or 15%) and remaining working part of the instrument with taper according to ISO standards.

5. Root canal reamer, according to claims 1, 2, 3, **characterised in that** it has a diameter in the tip portion (A) of 025, taper in the tip portion (A) of 0.15 (or 15%) and remaining working part of the instrument with taper according to ISO standards.

6. Root canal reamer, according to claims 1, 2, 3, **characterised in that** it has a diameter in the tip portion (A) of 025, taper in the tip portion (A) of 0.20 (or 20%) and remaining working part of the instrument with taper according to ISO standards.

## Patentansprüche

1. Wurzelkanalausräumer mit zwei Schneidkanten (1, 2), **dadurch gekennzeichnet, dass** die Schneidkanten (1b, 2b) des distalen Abschnitts (B) in einer Spirale angeordnet sind, während die Schneidkanten (1a, 2a) im Spitzenabschnitt (A) linear sind, zur Spitze (A1) hin in einem steilen Winkel, der größer als die Verjüngung des Rests des Arbeitsteils (B) ist, zusammenlaufen, auf der gleichen Ebene wie die Achse (X) des Wurzelkanalausräumers liegen und in Bezug auf die Achse (X) des Wurzelkanalausräumers symmetrisch sind.

2. Wurzelkanalausräumer nach Anspruch 1, **dadurch gekennzeichnet, dass** sich der Spitzenabschnitt (A) mit zwei linearen Schneidkanten (1a, 2a) über weniger als 4 Millimeter erstreckt.

3. Wurzelkanalausräumer nach Anspruch 1 oder 2, **dadurch gekennzeichnet, dass** die Schneidkanten (1b, 2b) des distalen Abschnitts (B) in einer Spirale mit einer Teilung, die vom Spitzenabschnitt (A) zur Krone hin schrittweise zunimmt, angeordnet sind.

4. Wurzelkanalausräumer nach Anspruch 1, 2 oder 3, **dadurch gekennzeichnet, dass** er einen Durchmesser am Spitzenabschnitt (A) von 020, eine Verjüngung am Spitzenabschnitt (A) von 0,15 (oder 15%) und das verbleibende Arbeitsteil des Instruments eine Verjüngung gemäß den ISO-Normen aufweist.

5. Wurzelkanalausräumer nach Anspruch 1, 2 oder 3, **dadurch gekennzeichnet, dass** er einen Durchmesser am Spitzenabschnitt (A) von 025, eine Verjüngung am Spitzenabschnitt (A) von 0,15 (oder 15%) und das verbleibende Arbeitsteil des Instruments eine Verjüngung gemäß den ISO-Normen aufweist.

6. Wurzelkanalausräumer nach Anspruch 1, 2 oder 3, **dadurch gekennzeichnet, dass** er einen Durchmesser am Spitzenabschnitt (A) von 025, eine Verjüngung am Spitzenabschnitt (A) von 0,20 (oder 20 %) und das verbleibende Arbeitsteil des Instruments eine Verjüngung gemäß den ISO-Normen aufweist.

## Revendications

1. Alésoir pour canaux radiculaires, avec deux tranchants (1, 2), **caractérisé en ce que** lesdits tranchants (1b, 2b) de la partie distale (B) sont disposés en hélice alors que lesdits tranchants (1a, 2a) dans la partie de pointe (A) sont linéaires, convergeant vers la pointe (A1) avec une inclinaison plus grande que la conicité du reste de la partie de travail (B), s'étendant sur le même plan de l'axe (X) de l'alésoir pour canaux radiculaires, et symétriques par rapport à l'axe (X) de l'alésoir pour canaux radiculaires.

2. Alésoir pour canaux radiculaires, selon la revendication 1, **caractérisé en ce que** la partie de pointe (A) avec deux tranchants linéaires (1a, 2a) s'étend pour moins de 4 millimètres.

3. Alésoir pour canaux radiculaires, selon les revendications 1 et 2, **caractérisé en ce que** les tranchants (1b, 2b) de la partie distale (B) sont disposés en hélice avec un pas croissant progressivement de la partie de pointe (A) vers la couronne.

4. Alésoir pour canaux radiculaires, selon les revendications 1, 2 et 3, **caractérisé en ce qu'**il présente un diamètre de 020 dans la partie de pointe (A), une conicité de 0,15 (ou 15%) dans la partie de pointe (A) et le reste de la partie de travail de l'instrument avec une conicité selon les standards ISO.

5. Alésoir pour canaux radiculaires, selon les revendications 1, 2 et 3 **caractérisé en ce qu'**il présente un diamètre de 025 dans la partie de pointe (A), une conicité de 0,15 (ou 15%) dans la partie de pointe (A) et le reste de la partie de travail de l'instrument avec une conicité selon les standards ISO.

6. Alésoir pour canaux radiculaires, selon les revendications 1, 2 et 3 **caractérisé en ce qu'**il présente un diamètre de 025 dans la partie de pointe (A), une conicité de 0,20 (ou 20%) dans la partie de pointe (A) et le reste de la partie de travail de l'instrument avec une conicité selon les standards ISO.
